# EUROPEAN PATENT APPLICATION

(11) **EP 1 035 679 A2**
(43) Date of publication of application: **13.09.2000**
(21) Application number: 00300949.5
(22) Date of filing: 07.02.2000
(51) Int. Cl.: H04J 14/02, H04J 7/00, H04J 9/00

(54) **Signal transmission system**

(30) Priority: 12.03.1999 GB 9905724
(71) Applicant: MARCONI COMMUNICATIONS LIMITED, Coventry, CV3 1HJ (GB)
(72) Inventor: Driscoll, Johh Patrick, Nottingham NG9 3EW (GB)
(74) Representative: Hoste, Colin Francis

(57) **Abstract**

A signal transmission system uses an optical signal for carrying traffic information by modulating the brightness of the optical signal at a high frequency. A lower frequency optical overhead signal also modulates the optical signal, and a detector having a fall time characteristic of substantially longer duration than its rise time characteristic and which is of substantially longer duration than the longest bit period of the traffic is used to recover the overhead signal. The optical overhead signal modulates the maximum brightness of the signal, but not its minimum brightness so that the signal can be recarried even if the system is AC coupled.

## Description

This invention relates to signal transmission systems, and more particularly to systems in which an optical carrier is used to carry traffic. In addition to carrying traffic, which can be representative of voice and/or data, usually in a multiplexed format, the optical signal can be required to include an optical overhead signal which assists in managing and routing the traffic and which itself has a low data rate, for example of the order of 10k bit/sec.

Typically, the optical overhead signal can be achieved by imposing small variations in the optical power from a transmitter laser, prior to modulating the laser output with the traffic signal. The optical path overhead signal will vary the laser output power, and a variation of up to about ±3% is unlikely to cause an unacceptable impairment to the traffic signal.

It is necessary to recover the optical path overhead signal at a receiver in the transmission system, but this presents practical difficulties, since simply filtering out the effect of traffic signal to leave the optical path overhead signal would require the optical path overhead signal to have a carrier frequency of the order of hundreds of MHz and the detection process at such carrier frequencies would thus require a band pass filter with a centre frequency of hundreds of MHz and a bandwidth of only approximately 10kHz, but such filters are impracticable.

The present invention seeks to provide an improved signal transmission system.

According to a first aspect of this invention, a signal transmission system in which traffic is carried on an optical carrier which is power modulated by an optical overhead signal, includes a peak detector having a fall time characteristic of substantially longer duration than its rise time characteristic and which fall time characteristic is of substantially longer duration than the longest bit period of the traffic, and means for recovering the optical overhead signal from said peak detector.

The effect of modulating a laser output with traffic signals is to put a null in the laser output signal whenever a traffic bit of value zero occurs. In operation, the peak detector can ride over these nulls, and recover the transmitted signal as it was at the input to the optical modulator. This solution requires a relatively low optical path overhead carrier frequency (i.e. up to about 100kHz), so that a peak detector with a low droop rate can track the optical path overhead carrier.

Whilst such a system, based on the use of a peak detector, can work well if the system is electrically DC coupled, problems can occur for an AC coupled system. In an AC coupled system, the electrical signals which are converted to optical signals at an optical transmitter, and the electrical signals which are obtained from the peak detector do not have a common electrical reference value. AC coupling can remove the long term average DC component of a received signal, thereby imparting an additional short term modulation which can be difficult to distinguish from an optical overhead signal.

According to a second aspect of this invention, a signal transmission system in which traffic is carried on an optical carrier which is power modulated by an optical overhead signal, includes a modulator for modulating substantially only the top or bottom level of the optical carrier with the optical path overhead signal, and a detector for detecting the optical path overhead signal in the presence of unwanted modulation affecting both the top and bottom level of the optical carrier.

Preferably the top level of the optical carrier is modulated.

An optical carrier signal consists of a beam of light, usually generated by a laser, and the power of the laser determines the brightness of the beam of light. Power modulation of the laser causes the brightness to vary, and by suitable modulation, the maximum brightness (i.e. top level of the beam) can be varied, and/or the minimum brightness (i.e. bottom level of the beam) can be varied. Usually the minimum brightness is zero, ie dark, and occurs when the laser is off, but due to the use of high frequency bit rates, the response of the laser may not be sufficiently fast to turn off completely in a bit period.

It is much preferred to modulate the top of the beam.

The invention is further described by way of example with reference to the accompanying drawings in which:
Figure 1 shows in schematic form a signal transmission system in accordance with the invention,
Figure 2 shows one form of an optical path overhead detector,
Figure 3 is an explanatory diagram relating thereto, and
Figure 4 shows an alternative form of the optical path overhead detector.

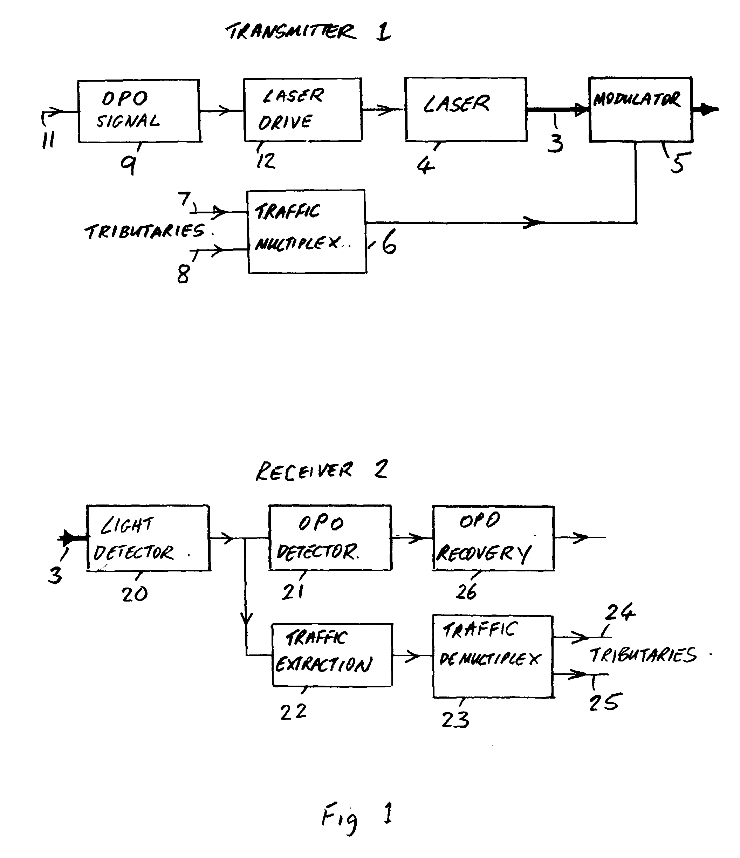

Referring to Figure 1, there is shown therein a signal transmission system in which data is carried from a transmitter 1 to a receiver 2 in optical form via a light guide 3. The optical signal is power, i.e. amplitude, modulated by the data traffic which it carries, and in practice the data will consist of a very high frequency modulation.

In this example, it is assumed that only a single optical carrier signal is sent along the light guide 3, although in practice many narrow band light beams can be sent by means of wavelength division multiplexing. Although the term narrow band is used to describe the light beam, it is, due to its very high frequency, able to carry data from a very large number of tributaries which present data to the system as lower frequency electrical signals, although in electrical signal terms they can be regarded as very high frequencies.

In order to manage the transmission of the data, and to ensure that the signal is correctly demultiplexed at its designation, it is desirable to include on the optical signal an optical path overhead signal, which is a relatively low frequency signal of the order of 10k bit/sec. This optical path overhead signal must be reliably extracted from the composite optical signal at the receiving end of the optical path in a manner which does not degrade the data traffic.

A laser 4 generates a coherent beam of light which is transmitted via a modulator 5 over the light guide 3, and the laser being modulated by data traffic from a multiplexer 6, which in turn receives data from several tributaries 7, 8, each tributary being a separate data stream of possibly different bit rate and composition. In general, the coherent beam of light will not comprise a single wavelength, but will have a small spread of wavelengths about a central value. Typically, the line width of the beam will be up to 200MHz. The multiplexed signal which is output from the multiplexer 6 typically has a bit rate of 38 MHz and above.

The laser 4 is driven by a laser drive circuit 12, which adjusts the laser bias current to control its brightness in response to the optical path overhead (OPO) signal from the OPO signal generator 9. The signal generator 9 receives the path overhead data via input 11, and this data is at the relatively low bit rate of 10k bit/sec. The signal generator 9 modulates this information onto a carrier signal of about 100kHz, which is applied to the laser drive unit 12.

The output from the modulator 5 thus has a relatively low frequency envelope variation imposed on the high frequency data traffic. Thus, for an individual logic 1 of data, the modulator output is on, i.e. it transmits light, and for an individual logic 0 it is dark. The overall brightness of the data traffic is therefore modulated by a low frequency component due to the optical path overhead signal.

At the receiver 2, the light guide 3 is coupled to a light detector 20, which generates an electrical signal corresponding to the variations in brightness of the received light, and this signal is routed to an optical path overhead detector 21, and to a traffic extraction circuit 22 which discards the optical path overhead signal, and passes the traffic to a demultiplexer 23. This demultiplexer 23 acts to reconstitute the original data tributaries on output lines 24, 25.

The optical path overhead signal is extracted from the received composite signal in a manner which is described in greater detail subsequently, and the signal is passed to an optical path overhead recovery unit 26, which decompiles the data carried by this signal so that it can be utilised by the receiver 2 as necessary to ensure correct operation of the transmission system.

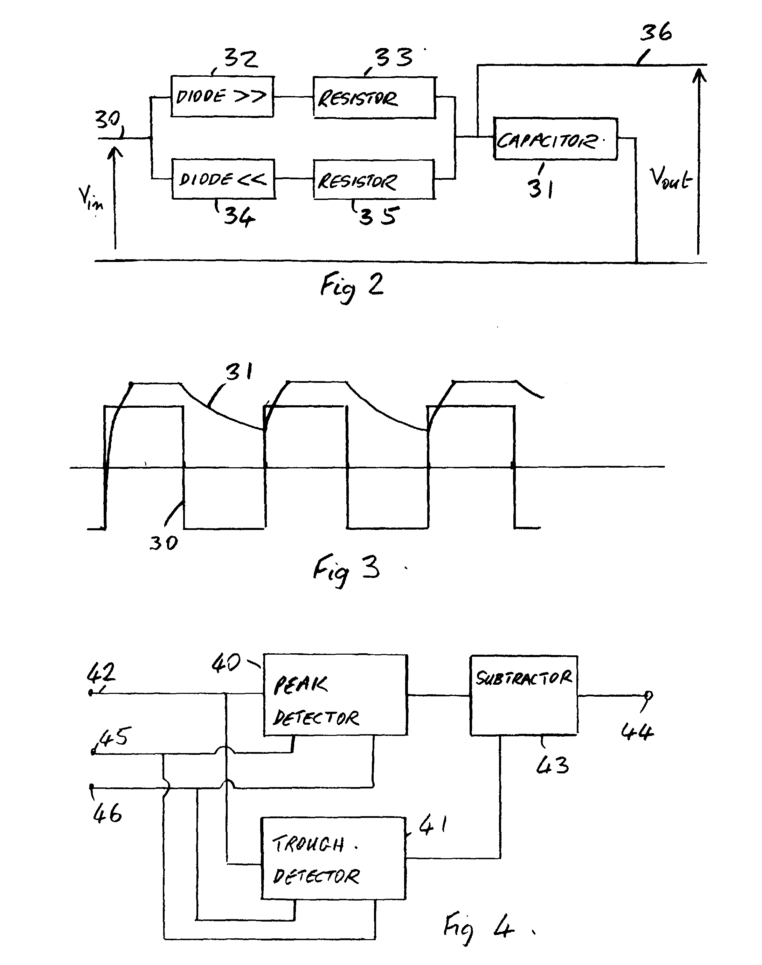

Referring to Figure 2, the optical path overhead signal is detected by means of an optical path overhead detector 21 which takes the form of a peak detector in this example. It consists of an input line 30, and a capacitor 31, between which a serially connected diode 32 and resistor 33 are connected in parallel with a further serially connected diode 34 and resistor 35, the diodes 32 and 34 being connected in opposite polarity as represented by » and « which indicates the direction of current flow. The output signal is taken via line 36.

The rise and fall time constants are determined by the values of the resistance of resistor 33 (for the rise time) or resistor 34 (for the fall time) in combination with the capacitance of the capacitor 31. The rise and fall times are made just short enough to track the modulation of the optical path overhead modulation, and a typical waveform is shown in Figure 3, in which the modulation is represented by the square wave 30, and the detector response by waveform 31. The rise time is not made as fast as possible, but is instead set so as not to respond excessively to any thermal noise or the like which may be present. The fall time is made as long as possible, consistent with the requirement to detect the modulation, so that the response of the detector does not fall excessively during the nulls in the received electrical signal caused by zero values in the traffic data.

In practice, the signal transmission system may behave as though it is AC coupled. The detector shown in Figure 2 works well for a DC coupled system. AC coupling removes the long term average DC component of the received signal and results in an additional modulation being imposed on both the top and bottom of the traffic signal, and the peak detector shown in Figure 2 may not be able to distinguish between the wanted and unwanted modulation components.

A modified optical path overhead detector 21 is shown in Figure 4, which acts as a peak trough detector. It consists of two detectors 40 and 41, connected to receive the input signal at terminal 42, and the outputs of the two detectors 40 are subtracted at subtractor 43 and the resulting signal is made available at output port 44. The time constants of the detector 40 are arranged to be the same as that shown in Figure 2 so that it operates as a peak detector, but for detector 41 the rise time is the same as the fall time for detector 40, and the fall time is the same as the rise time of detector 41. This is shown diagrammatically by the crossed linkages of the rise and fall time constants provided at terminals 45 and 46. The use of a slow rise time and a fast fall time in detector 41 causes it to act as a trough detector.

It takes advantage of the fact that in this example the wanted optical path overhead modulation component is imposed only onto the top of the received signal, but the unwanted modulation component is imposed on both the top and the bottom of the signal due to lack of DC coupling. The trough detector 41 tracks this unwanted modulation at the bottom of the signal, and subtracts this from the output of the peak detector 40 which tracks both modulation components at the top of the signal.

Simulations have shown that the peak trough detector of Figure 4 works well in extracting the wanted optical path overhead signal.

## Claims

1. A signal transmission system in which traffic is carried on an optical carrier which is power modulated by an optical overhead signal including a peak detector having a fall time characteristic of substantially longer duration than its rise time characteristic and which fall time characteristic is of substantially longer duration than the longest bit period of the traffic, and means for recovering the optical overhead signal from said peak detector.

2. A signal transmission system in which traffic is carried on an optical carrier which is power modulated by an optical overhead signal including a modulator for modulating substantially only the top or bottom level of the optical carrier with the optical path overhead signal, and a detector for detecting the optical path overhead signal in the presence of unwanted modulation affecting both the top and bottom level of the optical carrier.

3. A system as claimed in Claim 1 or 2 and wherein the top level of the optical carrier is modulated by the optical path overhead signal.

4. A system as claimed in Claim 2 or 3 and wherein the detector includes means for detecting signal peaks and means for detecting signal troughs, and for reconstituting the optical path overhead signal therefrom.

5. A system as claimed in any of the preceding claims and wherein the bandwidth of the optical path overhead signal is substantially less than the frequency of said traffic.
